(19) Europäisches Patentamt
European Patent Office
Office européen des brevets

(11) EP 1 370 137 B1

(12) **FASCICULE DE BREVET EUROPEEN**

(45) Date de publication et mention de la délivrance du brevet:
**27.07.2011 Bulletin 2011/30**

(21) Numéro de dépôt: **02718237.7**

(22) Date de dépôt: **04.03.2002**

(51) Int Cl.:
***A01N 41/12*** *(2006.01)* ***A01N 41/10*** *(2006.01)*
***A01N 25/18*** *(2006.01)*

(86) Numéro de dépôt international:
**PCT/FR2002/000768**

(87) Numéro de publication internationale:
**WO 2002/074083 (26.09.2002 Gazette 2002/39)**

(54) **TRAITEMENT PESTICIDE DES SOLS OU DES SUBSTRATS AVEC DES COMPOSES SOUFRES**

PESTIZID-BEHANDLUNG VON BÖDEN UND SUBSTRATEN MIT SCHWEFELVERBINDUNGEN

PESTICIDE TREATMENT OF SOILS OR SUBSTRATES WITH SULPHUR COMPOUNDS

(84) Etats contractants désignés:
**AT BE CH CY DE DK ES FI FR GB GR IE IT LI LU MC NL PT SE TR**

(30) Priorité: **19.03.2001 FR 0103674**

(43) Date de publication de la demande:
**17.12.2003 Bulletin 2003/51**

(73) Titulaire: **ARKEMA FRANCE**
**92700 Colombes (FR)**

(72) Inventeurs:
- **AUBERT, Thierry**
**F-64000 Pau (FR)**
- **AUGER, Jacques**
**F-37250 Veigne (FR)**

(74) Mandataire: **Lhoste, Catherine et al**
**ARKEMA FRANCE**
**Département Propriété Industrielle**
**420 Rue d'Estienne d'Orves**
**92705 Colombes Cedex (FR)**

(56) Documents cités:
**FR-A- 2 779 615** **GB-A- 249 830**
**US-A- 2 917 429** **US-A- 3 586 723**

- **DATABASE WPI Section Ch, Week 199937 Derwent Publications Ltd., London, GB; Class C03, AN 1999-439334 XP002185561 & JP 11 180807 A (MITSUI PETROCHEM IND CO LTD), 6 juillet 1999 (1999-07-06)**
- **DATABASE BIOSIS [en ligne] BIOSCIENCES INFORMATION SERVICE, PHILADELPHIA, PA, US; mai 1999 (1999-05) BENDING GARY D ET AL: "Characterisation of volatile sulphur-containing compounds produced during decomposition of Brassica juncea tissues in soil." Database accession no. PREV199900258128 XP002185560 & SOIL BIOLOGY & BIOCHEMISTRY, vol. 31, no. 5, mai 1999 (1999-05), pages 695-703, ISSN: 0038-0717**
- **PATENT ABSTRACTS OF JAPAN vol. 006, no. 154 (C-119), 14 août 1982 (1982-08-14) & JP 57 075906 A (HORIUCHI ISAO), 12 mai 1982 (1982-05-12) cité dans la demande**
- **PATENT ABSTRACTS OF JAPAN vol. 013, no. 515 (C-655), 17 novembre 1989 (1989-11-17) -& JP 01 207204 A (MITSUBISHI KASEI CORP), 21 août 1989 (1989-08-21) cité dans la demande**
- **DATABASE BIOSIS [en ligne] BIOSCIENCES INFORMATION SERVICE, PHILADELPHIA, PA, US; 1982 ENTWISTLE A R ET AL: "DI ALLYL DI SULFIDE TO REDUCE THE NUMBERS OF SCLEROTIA OF SCLEROTIUM-CEPIVORUM IN SOIL" Database accession no. PREV198375013460 XP002185580 & SOIL BIOLOGY AND BIOCHEMISTRY, vol. 14, no. 3, 1982, pages 229-232, ISSN: 0038-0717 cité dans la demande**
- **AUGER J ET AL: "ALLIUM SPP THIOSULFINATES AS SUBSTITUE FUMIGANTS FOR METHYL BROMIDE" PESTICIDE SCIENCE, ELSEVIER APPLIED SCIENCE PUBLISHER. BARKING, GB, vol. 55, no. 2, février 1999 (1999-02), pages 200-202, XP000998147 ISSN: 0031-613X cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **TADA, MASAHIRO ET AL: "Nematicidal and antimicrobial constituents from Allium grayi Regel and Allium fistulosum L. var. caespitosum" AGRIC. BIOL. CHEM. (1988), 52(9), 2383-5, 1988, XP002185579 cité dans la demande**

## Description

L'invention concerne le domaine de l'agriculture et a plus particulièrement pour objet le remplacement du bromure de méthyle dans tous ses usages de traitement des sols ou des substrats de plantes (terreaux, tourbes, laine de roche...), en particulier ceux destinés à l'agriculture, en vue d'y contrôler les nématodes, champignons pathogènes, insectes nuisibles et bactéries.

Actuellement, la désinfection des sols ou des substrats, par exemple ceux destinés à l'agriculture intensive et notamment ceux destinés à l'arboriculture, à l'horticulture et au maraîchage, est effectué majoritairement par fumigation au bromure de méthyle (consommation mondiale supérieure à 70 000 tonnes), ce composé présentant à l'état gazeux d'excellentes propriétés nématicide, fongicide, insecticide et bactéricide. Malheureusement, ce composé contribue à l'appauvrissement de la couche d'ozone et, conformément à l'accord de Montréal (1992), il ne devra plus être utilisé en 2005 dans les pays industrialisés. Il apparaît donc un besoin urgent de proposer aux utilisateurs des substituts aussi efficaces et les plus respectueux possibles de l'environnement. Malgré les efforts continus mis en oeuvre aussi bien par les organisations gouvernementales que par les organismes privés, il n'a été trouvé à ce jour aucun substitut capable, à lui seul et au même coût, de remplacer le bromure de méthyle dans tous ses usages avec la même efficacité (cf. USDA Report, Vol. 6, N.4 et Citrus & Vegetable Magazine, Methyl bromide Update : Spring 2000). En effet, les principaux substituts actuellement proposés sont très toxiques et nécessitent donc une protection respiratoire chère et peu commode (cas du dichloropropène) ou bien ils sont délicats à appliquer et conduisent donc à des résultats variables (cas du Métam-sodium, du Dazomet et du tétrathiocarbonate) ou bien encore ils sont nettement plus coûteux (cas de l'iodure de méthyle).

A notre connaissance, les seuls composés soufrés envisagés comme substituts au bromure de méthyle sont l'isothiocyanate de méthyle (MITC), le tétrathiocarbonate ou des composés générateurs de MITC comme le Métam-sodium et le Dazomet.

Malgré les efforts considérables fournis par la communauté scientifique depuis le bannissement du bromure de méthyle, il a été trouvé peu de molécules capables de le remplacer dans son application en fumigation des sols ou des substrats alors qu'il y a des centaines de pesticides disponibles (plus de 700 nématicides, fongicides, insecticides, bactéricides répertoriés dans le Pesticide Manual, Tenth edition, Ed. Clive Tombin). La raison est la nécessité pour les fumigants de remplir deux conditions essentielles : d' une part, ils ne doivent présenter, aux doses auxquelles ils sont actifs, aucune phytotoxicité sur les cultures mises en place après le traitement et d'autre part, ils doivent avoir la propriété essentielle et rare de ne pas être complètement absorbé dans les sols et de diffuser rapidement, sous la forme gaz, dans l'épaisseur du sol à traiter, les organismes pathogènes se trouvant souvent jusqu'à 50 centimètres au moins en-dessous de la surface du sol ; de plus, pour des raisons évidentes de productivité, ainsi que pour limiter le risque de réinfestation, le temps de traitement pendant lequel le fumigant agit doit être le plus court possible.

On trouve dans la littérature quelques indications éparses sur l'activité spécifique de certaines substances soufrées à l'égard de divers organismes pathogènes : c'est le cas par exemple des disulfures qui empêchent les larves de nématodes de sortir des kystes (brevet GB 249 830) ou qui agissent sur les insectes de type coléoptères ou lépidoptères présents dans les denrées stockées (Pestic. Sci. Vol. 55, 1999, pages 200-202) ; les diallyl disulfures ont une action fongicide sur les sclérotes de S. cepivorum (Soil Biology and Biochemistry, Viol.14, n°3, pages 229-232) ; les propriétés nématicides de disulfures ou trisulfures dérivés de certains alliums sur les nématodes de type Meloidogyne incognita sont décrites dans l'article Agric. Biol. Chem. 52 (9) 1988, pages 2383-2385. Les thiosulfinates ($n = x = 1$) sont décrits dans la littérature comme nématicides (JP 01 207 204), comme fongicides et antibactériens (JP 57 075 906), comme nématicides et antimicrobiens (Agric. Biol. Chem., 1988, 52(9), pages 2383-2385), comme insecticides contre les insectes des denrées stockées (Pestic. Sci. Vol. 55, 1999, pages 200-202). L'activité insecticide des vapeurs issues de broyats d'allium contenant entre autres des disulfures et des thiosulfinates a été mise en évidence dans la demande de brevet FR-A-2 779 615 proposant l'emploi de ces broyats pour le traitement par fumigation des denrées stockées. Cependant, pour l'homme de métier, il n'est a priori pas évident qu'un fumigant pour denrées stockées puisse convenir pour l'application en traitement des sols ou des substrats. En effet, comme expliqué à la colonne 3 (lignes 8-54) du brevet US 5 518 692 préconisant l'iodure de méthyle comme substitut au bromure de méthyle, le sol est un milieu beaucoup plus complexe que les denrées stockées (humidité non uniforme, particules de diamètres très variables, etc ...) et les organismes à contrôler sont beaucoup plus nombreux et variés dans le cas des sols. En conséquence, la plupart des fumigants utilisés pour les denrées stockées ne sont pas utilisés pour la fumigation des sols.

On ne trouve dans l'art antérieur aucune indication d'une activité pesticide globale de ces substances, c'est-à-dire une activité simultanée nématicide, fongicide, insecticide et bactéricide. L'activité nématicide, fongicide et bactéricide des diméthylpolysulfures (ayant un nombre d'atomes de soufre supérieur ou égal à 3) est décrite dans le brevet US 2,917,429 mais il n'est pas fait mention de propriétés insecticides et le diméthyldisulfure est reporté comme ayant une activité nulle vis-à-vis d'un grand nombre de champignons.

Il a maintenant été trouvé que les composés soufrés de formule générale:

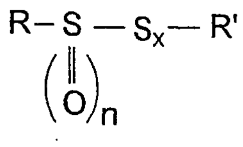

(I)

dans laquelle R représente un radical alkyle ou alcényle contenant de 1 à 4 atomes de carbone, n est égal à 0, 1 ou 2, x est un nombre allant de 0 à 4, et R' représente un radical alkyle ou alcényle contenant de 1 à 4 atomes de carbone ou, seulement si n = x = 0, un atome d'hydrogène ou de métal alcalin sont particulièrement intéressants pour la fumigation des sols et des susbtrats parce qu'ils remplissent les trois conditions essentielles pour pouvoir être utilisés pratiquement en désinfection des sols ou des substrats : ils présentent des propriétés pesticides globales (nématicides, fongicides, insecticides, bactéricides) ; ils sont capables de diffuser rapidement dans l'épaisseur du sol à traiter pour conduire à une concentration en gaz suffisante pour tuer les organismes pathogènes présents ; aux doses nécessaires pour tuer ces organismes pathogènes, les composés de formule (I) ne présentent aucune phytotoxicité sur les cultures mises en place après le traitement. Cet ensemble de propriétés indispensables pour l'application envisagée n'avait jamais été décrit auparavant pour les composés de formule (I).

Comme substituts au bromure de méthyle, les composés de formule (I) sont d'autant plus intéressants que certains sont déjà présents dans la nature en

Néanmoins ne fait partie de l'invention telle que revendiquée uniquement le traitement pesticide des sols ou des substrats de plantes par fumigation, à effet cumulatif, nématicide, fongicide, insecticide et bactéricide, caractérisé en ce que l'on applique dans le sol ou dans le substrat à une dose comprise entre 150 et 1000 kg/ha au moins un composé soufré qui est le diméthyldisulfure. provenance de la dégradation naturelle des crucifères et des alliums. En particulier, les thiosulfinates, inclus dans la formule générale (I), sont des produits émis naturellement lorsque l'on broye des alliums et, à ce titre, peuvent être utilisés en agriculture biologique. D'autre part, ne contenant pas d'atomes d'halogène générateurs de radicaux halogénés responsables de la destruction catalytique de l'ozone stratosphérique, les composés de formule (I) sont sans danger pour la couche d'ozone.

Comme exemples non limitatifs de radicaux R et R', on peut citer les radicaux méthyle, propyle, allyle et 1-propényle. Parmi les composés de formule (I), on préfère les composés pour lesquels n = 0. D'autres composés préférés sont les disulfures (n = 0, x = 1) et plus particulièrement le diméthyldisulfure (DMDS).

Néanmoins ne fait partie de l'invention telle que revendiquée uniquement le traitement pesticide des sols ou des substrats de plantes par fumigation, à effet cumulatif, nématicide, fongicide, insecticide et bactéricide, caractérisé en ce que l'on applique dans le sol ou dans le substrat à une dose comprise entre 150 et 1000 kg/ha au moins un composé soufré qui est le diméthyldisulfure.

Les composés de formule (I) peuvent être utilisés à l'état pur ou sous diverses formes qui, selon la nature du composé (I), peuvent être une émulsion aqueuse, une microémulsion, un produit microencapsulé ou supporté par un solide, une solution dans l'eau, dans un solvant organique ou en mélange avec un produit pouvant lui-même avoir une activité pour le traitement des sols.

Toutes ces formulations peuvent être réalisées selon des méthodes bien connues de l'homme du métier. Ainsi, par exemple, les émulsions aqueuses et les microémulsions peuvent être obtenues en additionnant un ou plusieurs tensio-actifs au composé de formule (I), puis en rajoutant au mélange obtenu une certaine quantité d'eau de façon à obtenir une émulsion stable ou une microémulsion.

Sont plus particulièrement adaptés à la préparation des émulsions aqueuses ou des microémulsions les tensio-actifs plutôt hydrophiles, c'est-à-dire ceux ayant une HLB ("Hydrophile Lipophile Balance") supérieure ou égale à 8, qui peuvent être de nature anionique, cationique, non ionique ou amphotère. Comme exemples non limitatifs de tensio-actifs anioniques, on peut citer :

- les sels de métal alcalin, alcalino-terreux, d'ammonium ou de triéthanolamine des acides alkyl-, aryl- ou alkylaryl-sulfoniques, des acides gras à pH basique, de l'acide sulfosuccinique ou des esters alkyliques, dialkyliques, alkylaryliques ou polyoxyéthylène-alkylaryliques de l'acide sulfosuccinique,
- les sels de métal alcalin ou alcalino-terreux des esters d'acide sulfurique, phosphorique, phosphonique ou sulfoacétique et d'alcools gras saturés ou insaturés, ainsi que leurs dérivés alkoxylés,
- les sels de métal alcalin, ou alcalino-terreux des acides alkyl aryl sulfuriques, alkyl aryl phosphoriques, alkyl aryl sulfoacétiques, ainsi que leurs dérivés alkoxylés.

Les tensio-actifs cationiques utilisables sont, par exemple, ceux de la famille des alkyl ammonium quaternaires, des sulfoniums ou des amines grasses à pH acide, ainsi que leurs dérivés alkoxylés.

Comme exemples non limitatifs de tensio-actifs non ioniques, on peut citer les alkyl phénol alkoxylés, les alcools

alkoxylés, les acides gras alkoxylés, les esters gras de glycérol ou les dérivés gras du sucre.

Les tensio-actifs amphotères utilisables sont, par exemple, les alkyl bétaïnes ou les alkyl taurines.

Les tensio-actifs préférés pour la préparation des émulsions aqueuses et des microémulsions sont les composés à base d'alkyl benzène sulfonate et d'alkyl phénol alkoxylé.

Les solvants organiques utilisables pour dissoudre les composés de formule (I) selon l'invention sont les hydrocarbures, les alcools, les éthers, les cétones, les esters, les solvants halogénés, les huiles minérales, les huiles naturelles et leurs dérivés ainsi que les solvants polaires aprotiques tels que le diméthylformamide, le diméthylsulfoxide ou la N-méthylpyrrolidone. Conviennent particulièrement bien les solvants biodégradables, plus particulièrement les esters méthyliques des huiles de colza.

Les produits à activité pesticide particulièrement adaptés pour être mélangés aux composés de formule (I) selon l'invention sont des produits purs tels que le 1,3-dichloropropène ou la chloropicrine ($Cl_3C$-$NO_2$) eux-mêmes utilisés en tant que fumigants, les solutions aqueuses de produits tels que le Métam-sodium ($CH_3$-NH-$CS_2^-Na^+$) ou le tétrathiocarbonate de sodium ($Na_2CS_4$) également utilisés comme fumigants, ou tout autre produit ayant une activité complémentaire ou synergique avec les composés de formule (I), comme le MITC ($CH_3$-NCS) ou le Dazomet (générateur de MITC).

Les composés de formule (I) et les compositions les contenant peuvent être appliqués suivant l'une quelconque des méthodes classiques d'introduction de pesticides dans le sol, comme par exemple l'injection par coutres qui permet d'introduire le produit en profondeur, la pulvérisation sur le sol, le goutte à goutte par un système d'irrigation classique ou l'aspersion du type "sprinkler". Après l'introduction du produit dans le sol et une éventuelle répartition (par exemple par une roto-bêche dans le cas d'une injection dans le sol), la surface du sol peut éventuellement être « fermée », soit par un glaçage de la surface au moyen d'un rouleau lisseur, soit par un film plastique.

Les doses de composé (I) à utiliser pour obtenir l'effet désiré se situent généralement entre 150 et 1000 kg/ha et dépendent de la nature du composé (I), du niveau d'infestation du sol, de la nature des ravageurs et des organismes pathogènes, du type de culture et de sol, et des méthodes d'application. A ces doses, on observe l'effet pesticide général recherché (à la fois nématicide, fongicide, insecticide et bactéricide) et pas d'effet phytotoxique.

On ne sortirait pas du cadre de la présente invention en associant le traitement par le DMDS avec un traitement (simultané ou non) avec une ou plusieurs autres substances pesticides.

Les exemples suivants illustrent l'invention.

**EXEMPLE 1 (Formulations)**

Exemple1a : des émulsions aqueuses ayant une stabilité suffisante pour permettre une application homogène du produit dans le sol après la préparation de l' émulsion peuvent être obtenues en mélangeant :

- 692 g de diméthyldisulfure, 38,5 g de Toximul® D, 38,5 g de Toximul® H (2 tensio-actifs commercialisés par la société Stepan, à base d'alkyl benzène sulfonate et d'alkylphénol alkoxylé en solution alcoolique), et 9230 g d'eau : formulation A.
- 1800 g de diméthyldisulfure, 160 g de Toximul® DH68, 40 g de Toximul® DM83 (2 tensio-actifs commercialisés par la société Stepan, à base d'alkyl benzène sulfonate), et 8000 g d'eau : formulation B.
- 1600 g de diméthyldisulfure, 320 g de Toximul® DH68, 80 g de Toximul® DM83 (2 tensio-actifs commercialisés par la société Stepan, à base d'alkyl benzène sulfonate), et 8000 g d'eau : formulation C.

Exemple 1b : une microémulsion eau - diméthyldisulfure peut être préparée en ajoutant 4400 g d'eau à un mélange de 4400 g de diméthyldisulfure, 960 g de Toximul® DH68 et 240 g de Toximul® DM83 (2 tensio-actifs commercialisés par la société Stepan, à base d'alkyl benzène sulfonate) : formulation D.

Exemple 1c : une solution de diméthyldisulfure dans l'ester méthylique de colza, solvant biodégradable qui permet d'augmenter le point éclair de la préparation à appliquer et donc d' améliorer la sécurité de l'applicateur, peut être obtenue en dissolvant 3000 g de diméthyldisulfure dans 7000 g d' ester méthylique de colza : formulation E.

**EXEMPLE 2 (Phytotoxicité)**

Exemple 2a :

L'absence de phytotoxicité du diméthyldisulfure (DMDS) appliqué sous la forme de la formulation A, dans la gamme de doses où il est efficace sur les organismes pathogènes du sol, a été démontrée sur de jeunes plants de concombres (9 cm, 2 feuilles, hybride ARIS) et de tomates (13 cm, 3 feuilles, hybride JUMBO) :

Pour les deux types de culture, on a réalisé 4 traitements sur 20 plants :

- contrôle non traité
- 360 kg/ha de DMDS
- 540 kg/ha de DMDS
- 720 kg/ha de DMDS

Cinq jours après le traitement, les jeunes plants sont transplantés dans des pots de 20 cm de diamètre et 35 cm de haut.

Les observations qui portent sur le nombre de feuilles par plant et l'état visuel des plants sont réalisées 15 et 41 jours après la transplantation :

**Tableau 1 : nombre moyen de feuilles par plant**

| Traitement | Tomate | | Concombre | |
|---|---|---|---|---|
| | après 15 jours | après 41 jours | après 15 jours | après 41 jours |
| Contrôle non traité | 5,5 | 9,7 | 5,4 | 9,8 |
| DMDS : 360 kg/ha | 5,3 | 9,6 | 5,3 | 9,8 |
| DMDS : 540 kg/ha | 5,3 | 9,4 | 5,7 | 9,7 |
| DMDS: 720 kg/ha | 5,7 | 9,8 | 5,7 | 9,9 |

Les résultats du tableau 1 montrent qu'il n'y a pas de différence significative entre le contrôle non traité et les plants traités au DMDS , quelle que soit la concentration testée ; de plus aucun symptôme visuel de phytotoxicité n'a été détecté.

ExemPle 2b : Absence de phytotoxicité sur la laitue du DMDS, appliqué à 150 kg/ha, en plein champ, sous serre.

***1. Matériel et méthodes***

Variété de laitue: Sprintia

Traitement : Le DMDS est appliqué sous la forme de la formulation A à l'aide d'un pulvérisateur à jet, puis incorporé sur une profondeur d'environ 5 cm avec une fraise rotative. Le sol est ensuite bâché par un film de polyéthylène noir.

Plantation : 7 jours après le traitement, à raison de 160 000 pieds/ha

Récolte : 2 mois et 20 jours après plantation

***2. Résultats***

Des observations visuelles sur le terrain à 1 et 2 mois après la plantation n'ont révélé aucun signe de phytotoxicité. A la récolte, le poids moyen des laitues traitées au DMDS a été mesuré et trouvé égal à 505 g, à comparer à 490 g pour le témoin sans traitement. On peut donc en conclure que le traitement effectué avec le DMDS est sans effet phytotoxique sur la laitue.

**EXEMPLE 3 (DIFFUSION DANS LE SOL)**

La vitesse de diffusion du DMDS a été étudiée en remplissant une enceinte étanche en pyrex de 3,3 litres et de 40 cm de hauteur de 2,5 litres de terre (soit 33 cm) en provenance de la vallée de la Garonne (sol sablo-limoneux contenant 1,6 % de matière organique) ; le DMDS a été déposé à la surface de la terre à 2 doses : 300 et 800 kg/ha soit, en considérant une désinfectation sur 30 cm, des doses de 100 et 266,6 g/m$^3$ de sol. On mesure ensuite par chromatographie en phase gazeuse , en fonction du temps (en heures), les concentrations en DMDS sous la forme gazeuse (en glm$^3$) dans le volume libre supérieur de l'enceinte (point A) ainsi qu'à 11 cm (point B), 22 cm (point C) et 33 cm (point D) en-dessous du niveau de la terre grâce à 3 ouvertures équipées de septum étanches sur le côté de l'enceinte ; on obtient ainsi l'évolution de la concentration en fonction du temps pour les 4 points de mesure, comme montré dans le tableau 2 dans le cas de la dose de 800 kg/ha.

**Tableau 2 : Concentrations en DMDS en gim$^3$ - cas de la dose 800 kg/ha**

| Temps en h | A (0 cm) | B (-11 cm) | C (-22 cm) | D (-33 cm) |
|---|---|---|---|---|
| 0 | 0 | 0 | 0 | 0 |
| 1 | 144,9 | 76,6 | 3 | 0 |
| 3 | 152,7 | 73,9 | 5,1 | 0,3 |
| 5 | 96,3 | 63,8 | 48,4 | 21,5 |
| 5,5 | 123,7 | 91,4 | 58,3 | 29,4 |
| 24 | 32,7 | 30,2 | 40,1 | 34,4 |
| 96 | 11,8 | 11,5 | 12,9 | 14,6 |

Le tableau 2 montre qu'il suffit de 24 heures environ pour que la concentration en DMDS soit homogène dans toute l'épaisseur de la colonne de terre.

Le produit CT des concentrations C par les temps de mesure T est une autre donnée essentielle qui indique les doses cumulées de DMDS auxquelles sont soumis les organismes pathogènes se trouvant éventuellement aux différents points de mesure. On trouve ainsi, pour les deux concentrations testées, les valeurs de CT en gh/m$^3$ indiquées dans le tableau 3.

**Tableau 3**

| Doses | A (0 cm) | B (-11 cm) | C (-22 cm) | D (-33 cm) |
|---|---|---|---|---|
| 300 kg/ha | 3187 | 2737 | 2753 | 2210 |
| 800 kg/ha | 4145 | 3327 | 3276 | 2809 |

Les valeurs de CT mesurées sont donc de l'ordre de 2500 gh/m$^3$ pour une dose de 300 kg/ha et 3000 gh/m$^3$ pour une dose de 800 kg/ha.

**EXEMPLE 4 (PROPRIETES FONGICIDES)**

L'effet fongicide du DMDS a été démontré sur quatre des organismes pathogènes communs et dommageables aux principales cultures maraîchères décrits dans l'article "Désinfecter les sols autrement" publié en juin 1999 dans la revue du CTIFL (Centre technique interprofessionnel des fruits et légumes). Ces quatre organismes sont les suivants:

→ *Phytophthora cactorum*, l'un des représentants les plus connus de la famille des Phytophthora, champignons polyphages attaquant particulièrement la tomate, le poivron et le fraisier, ces trois cultures représentant la majorité de la consommation du bromure de méthyle au niveau mondial. *Phtytophthora cactorum*, en particulier, attaque principalement le fraisier et les arbres fruitiers.
→ *Rhizoctonia solani :* groupe de pathogènes polyphages très important dans le genre des Rhizoctonia et s'attaquant à de très nombreuses cultures maraîchères dont le poivron et la laitue.
→ *Sclerotinia sclerotiorum:* champignon polyphage attaquant particulièrement les cultures de melons.
→ *Sclerotium rolfsii:* champignon également polyphage que l'on trouve par exemple sur les cultures de melon et de courgette.

Ces quatre champignons ont été étudiés sous la forme suivante :

- *Sclérotinia sclerotiorum* : sclérotes
- *Sclerotium rolfsii* : sclérotes
- *Rhizoctonia solani* : grains d'orge colonisés (mycélium et sclérotes)
- *Phytophthora cactorum*: grains de millet colonisés (mycélium, sporanges et oospores)

**Préparation des champignons (24 h avant l'opération de gazage)**

1. Préparation des sclérotes de *Sclerotinia sclerotiorum* et de *Sclerotium rolfsii*: Les champignons sont cultivés sur milieu malt gélosé jusqu'à l'obtention des sclérotes. Les sclérotes sont prélevés stérilement et stockés à sec en

boites de Pétri vides jusqu'à leur utilisation. Les sclérotes utilisés pour l'essai ont plus de 3 mois et sont parfaitement dormants.

2. Préparation de *Phytophthora cactorum* et de *Rhizoctonia solani:*

Le millet et l'orge servant à la multiplication des deux champignons sont humectés avec de l'eau ultra pure par immersion pendant 24 heures. Les grains sont ensuite légèrement égouttés puis répartis en fioles et autoclavés (3 autoclavages à 110 °C pendant 20 minutes, 3 fois à 24 heures d'intervalle). Des fragments de culture de champignons sont introduits dans les fioles qui sont ensuite incubées à 22 °C +/-2°C (lumière blanche 18h) jusqu'à l'obtention d'une colonisation homogène. Les grains sont ensuite sortis des fioles stérilement, séchés au flux stérile d'une hotte puis stockés à sec jusqu'à leur utilisation.

**Conditions de gazage et de désorption**

L'ensemble des lots de champignons à traiter est placé durant quelques heures à la température de l'essai (20°C). Entre 35 et 300 unités de champignons ou "propagules" (grains ou sclérotes) sont soumis au gazage lors de chaque essai.

Chaque enceinte de fumigation comprenant une ou plusieurs espèces de champignons correspond à un ballon de verre étanche au gaz d'un volume de 11 litres. Chaque ballon est équipé de piquages, inférieur pour l'introduction du DMDS liquide, supérieur pour la prise d'échantillon d'air par seringue.

Avant l'introduction du gaz, un vide partiel (-500 mbars) est effectué dans le ballon avec une pompe à vide. Ceci permet, d'une part, d'éviter le phénomène de surpression dû à l'expansibilité du DMDS dans le ballon et, d'autre part, de favoriser une meilleure homogénéité du mélange air-gaz dans les premières secondes qui suivent l'injection. Le DMDS (pesé précisément au mg) est injecté à la seringue par voie liquide au travers du piquage bas c'est-à-dire sous le grillage placé à mi-hauteur du ballon et supportant les lots de champignons. Après l'introduction du produit, la pression interne du ballon est rétablie à la pression atmosphérique. Un agitateur magnétique fonctionne pendant toute la durée du traitement pour bien homogénéiser le mélange air-gaz.

A la fin du gazage, le couvercle du ballon est enlevé. Une minute après cette opération, les lots de champignons gazés sont sortis et laissés à l'air libre durant 15 minutes pour désorption du DMDS. Ils sont ensuite transvasés sur une boîte de Pétri, celle-ci restant ouverte durant 5 minutes pour permettre une parfaite désorption du gaz.

**MESURE DES CONCENTRATIONS EN GAZ**

Par CPG avec détecteur FID, on mesure la concentration moyenne (C en g/m3) de DMDS dans l'enceinte de fumigation après homogénéisation du gaz dans l'air de l'enceinte et, compte tenu de la durée d'exposition (T en heures), on calcule le produit CT (g.h/m3) qui, dans le domaine de la fumigation, est le paramètre clé à considérer, puisque l'efficacité biologique d'un gaz envers un agent pathogène donné n'est effective que si ce dernier a été exposé à une certaine concentration moyenne C durant une certaine durée d'exposition T, c'est-à-dire à une certaine valeur du produit CT, valeur (ou dose) que l'on peut atteindre de différentes façons : faibles concentrations et longue durée d'exposition ou l'inverse.

**Conditions de lecture des résultats**

Grains: Après gazage, les grains sont déposés sur un milieu sélectif à raison de 5 à 10 par boite de Pétri de 90 mm (*Rhizoctonia:* Malt agar; *Phytophthora:* Malt agar +Pimaricine,Ampicilline,Rifampicine,Benomyl).

Sclérotes: Après gazage, les sclérotes sont désinfectés superficiellement avec de l'eau de Javel (1 % de NaOCl), rincés deux fois à l'eau stérile, puis déposés à raison de un par boite sur un milieu Malt agar-Chloramphénicol (200ppm).

**Expression des résultats**

On note quotidiennement le nombre de propagules donnant naissance à une colonie (propagules viables), jusqu'à ce qu'il n'y ait plus d'évolution, et au maximum 19 jours après le jour de gazage.

Les résultats sont exprimés en :

→ **viabilité** (V), c'est-à-dire le pourcentage de propagules viables ayant donné naissance à une colonie

→ **réduction de viabilité** (Rv) par rapport au témoin, c'est-à-dire:

$$R_V = \frac{V_{témoin} - V}{V_{témoin}} \times 100$$

→ **note de vigueur** (Nm): à chaque propagule ayant donné naissance à une colonie, on attribue une note (N) décrivant la rapidité de cette propagule à se développer; cette note, égale à la différence entre le nombre de jours total d'observation (19 au maximum) et le nombre de jours entre le dépôt en boîte de Pétri et le développement de la colonie, est d'autant plus importante que l'apparition de la colonie est proche de la date de dépôt en boîte de Pétri. Pour chacun des essais, on effectue ensuite une moyenne (Nm) des notes attribuées.

→ **réduction de note de vigueur** ($R_{Nm}$) par rapport au témoin, c'est-à-dire:

$$R_{Nm} = 100 - \frac{Nm}{Nmtémoin} \times 100$$

**RÉSULTATS**

**1. Efficacité biologique du DMDS sur *Phytophtora cactorum***

Les résultats rassemblés dans le tableau 4 montrent clairement qu'à des doses CT supérieures à 2500 gh/m3 environ, l'efficacité fongicide progresse régulièrement avec la dose CT : baisse de la viabilité et de la note de vigueur. L'efficacité totale (0 % de viabilité) est obtenue aux environs de 3500 gh/m3.

Tableau 4 Récapitulatif de l'ensemble des lectures exprimées en terme de viabilité et de vigueur sur *Phytophthora cactorum* (X = nombre de grains)

| X | C | T | CT | Viabilité | | Vigueur | |
|---|---|---|---|---|---|---|---|
| | | | | V | RV | Nm (sur 12 jours) | RNm |
| 60 | 17,46 | 24 | 419 | 91,7 | 6,8 | 7,7 | 15,5 |
| 60 | 26,04 | 24 | 625 | 100 | -1,7 | 8,05 | 11,9 |
| 60 | 29,29 | 24 | 703 | 100 | -1,7 | 8,3 | 9,1 |
| 60 | 37,79 | 24 | 907 | 100 | -1,7 | 7,2 | 21,2 |
| 60 | 15,91 | 66 | 1050 | 95 | 5,0 | 5,5 | 43,1 |
| 90 | 21,24 | 66 | 1402 | 97,8 | 2,2 | 6,6 | 32,2 |
| 60 | 30,96 | 48 | 1450 | 95 | 3,4 | 5,4 | 40,7 |
| 90 | 28,77 | 66 | 1899 | 97,8 | 2,2 | 5,6 | 42,6 |
| 90 | 30,02 | 66 | 1981 | 97,8 | 2,2 | 5,3 | 45,7 |
| 60 | 51,25 | 48 | 2460 | 43,3 | 55,9 | 1,7 | 81,2 |
| 300 | 37,44 | 66 | 2471 | nm* | nm* | nm* | nm* |
| 90 | 42,98 | 66 | 2837 | 16,7 | 83,3 | 0,6 | 93,6 |
| 300 | 45,06 | 66 | 2974 | nm* | nm* | nm* | nm* |
| 90 | 48,02 | 66 | 3169 | 1,1 | 98,9 | 0,05 | 99,5 |

(suite)

| X | C | T | CT | Viabilité | | Vigueur | |
|---|---|---|---|---|---|---|---|
| | | | | V | RV | Nm (sur 12 jours) | RNm |
| 300 | 52,53 | 66 | 3467 | 0 | 100 | 0 | 100 |
| * nm = non mesuré | | | | | | | |

## 2. Efficacité biologique du DMDS sur *Rhizoctonia solani*

Les résultats rassemblés dans le tableau 5 montrent clairement qu'à des doses CT supérieures à 2000 gh/m3 environ, l'efficacité fongicide progresse régulièrement avec la dose CT : baisse de la viabilité et de la note de vigueur. L'efficacité totale (0 % de viabilité) est obtenue aux environs de 3500 gh/m3.

Tableau 5 : Récapitulatif de l'ensemble des lectures exprimées en terme de viabilité et de vigueur sur *Rhizoctonia solani* (X = nombre de grains)

| X | C | T | CT | Viabilité | | Vigueur | |
|---|---|---|---|---|---|---|---|
| | | | | V | RV | Nm (sur 11 jours) | RNm |
| 60 | 17,46 | 24 | 419 | 100 | 0 | 9,0 | 0 |
| 60 | 26,04 | 24 | 625 | 100 | 0 | 8,7 | 3,1 |
| 70 | 29,29 | 24 | 703 | 100 | 0 | 8,3 | 7,3 |
| 70 | 37,79 | 24 | 907 | 100 | 0 | 7,1 | 21,6 |
| 65 | 15,91 | 66 | 1050 | 89,2 | 10,8 | 7,0 | 22,2 |
| 65 | 21,24 | 66 | 1402 | 96,9 | 3,1 | 7,6 | 15,0 |
| 65 | 30,96 | 48 | 1450 | 98,5 | 1,5 | 4,4 | 51,3 |
| 70 | 28,77 | 66 | 1899 | 84,3 | 15,7 | 6,0 | 33,2 |
| 75 | 30,02 | 66 | 1981 | 94,7 | 5,3 | 7,4 | 17,2 |
| 73 | 51,25 | 48 | 2460 | 11,0 | 89,0 | 0,3 | 96,2 |
| 286 | 37,44 | 66 | 2471 | 24,1 | 75,9 | 0,6 | 92,0 |
| 90 | 42,98 | 66 | 2837 | 2,2 | 97,8 | 0,1 | 98,4 |
| 286 | 45,06 | 66 | 2974 | 9,4 | 90,6 | 0,1 | 98,4 |
| 80 | 48,02 | 66 | 3169 | 1,2 | 98,8 | 0,05 | 99,3 |
| 290 | 52,53 | 66 | 3467 | 0 | 100 | 0 | 100 |

## 3. Efficacité biologique du DMDS sur *Sclerotinia sclerotiorum*

Les résultats rassemblés dans le tableau 6 suivant montrent clairement qu'à des doses CT supérieures à 1000 gh/m3 environ, l'efficacité fongicide progresse régulièrement avec la dose CT : baisse de la viabilité et de la note de vigueur. L'efficacité totale (0 % de viabilité) est obtenue aux environs de 3500 gh/m3, en considérant que le point CT 3467 est un point anormal.

Tableau 6 : Récapitulatif de l'ensemble des lectures exprimées en terme de viabilité et de vigueur sur *Sclerotinia sclerotiorum* (X = nombre de sclérotes)

| X | C | T | CT | Viabilité | | Vigueur | |
|---|---|---|---|---|---|---|---|
| | | | | V | RV | Nm (sur 19 jours) | RNm |
| 39 | 17,46 | 24 | 419 | 89,7 | -3,0 | 13,3 | -3,6 |

(suite)

| X | C | T | CT | Viabilité V | Viabilité RV | Vigueur Nm (sur 19 jours) | Vigueur RNm |
|---|---|---|---|---|---|---|---|
| 41 | 26,04 | 24 | 625 | 87,8 | -0,8 | 12,8 | 0,1 |
| 41 | 29,29 | 24 | 703 | 85,4 | 2,0 | 12,6 | 2,2 |
| 38 | 37,79 | 24 | 907 | 81,6 | 6,3 | 12,0 | 6,6 |
| 67 | 15,91 | 66 | 1050 | 41,8 | 56,1 | 5,1 | 63,6 |
| 62 | 21,24 | 66 | 1402 | 46,8 | 50,9 | 1,3 | 90,6 |
| 47 | 30,96 | 48 | 1450 | 29,8 | 65,8 | 1,0 | 92,1 |
| 64 | 28,77 | 66 | 1899 | 29,6 | 68,9 | 3,6 | 74,8 |
| 54 | 30,02 | 66 | 1981 | 20,3 | 78,7 | 2,7 | 81,2 |
| 41 | 51,25 | 48 | 2460 | 14,6 | 83,2 | 0,7 | 94,9 |
| 170 | 37,44 | 66 | 2471 | 32,9 | 67,1 | 4,6 | 70,5 |
| 64 | 42,98 | 66 | 2837 | 14,1 | 85,2 | 1,8 | 87,5 |
| 170 | 45,06 | 66 | 2974 | 11,2 | 88,8 | 1,6 | 89,9 |
| 64 | 48,02 | 66 | 3169 | 0 | 100 | 0 | 100 |
| 170 | 52,53 | 66 | 3467 | 32,3 | 67,7 | 3,3 | 79,0 |

**4. Efficacité biologique du DMDS sur *Scleratium rolfsii***

Les résultats obtenus sont rassemblés dans le tableau 7 suivant. Pour ce champignon, on a observé une légère dégradation de la qualité de l'inoculum au cours du temps. Néanmoins, la viabilité et la vigueur sont fortement affectées à partir des CT de 900 à 1000 gh/m3 et l'efficacité totale est obtenue entre 2000 et 2500 gh/m3.

Tableau 7 : Récapitulatif de l'ensemble des lectures exprimées en terme de viabilité et de vigueur sur *Sclerotium rolfsii* (X = nombre de sclérotes)

| X | C | T | CT | Viabilité V | Viabilité RV | Vigueur Nm (sur 19 jours) | Vigueur RNm |
|---|---|---|---|---|---|---|---|
| 44 | 17,46 | 24 | 419 | 59,1 | 33,7 | 5,1 | 40,9 |
| 41 | 26,04 | 24 | 625 | 53,7 | 39,8 | 4,8 | 44,3 |
| 37 | 29,29 | 24 | 703 | 51,4 | 42,4 | 4,4 | 48,7 |
| 37 | 37,79 | 24 | 907 | 16,2 | 81,8 | 1,4 | 84,2 |
| 58 | 15,91 | 66 | 1050 | 27,6 | 68,0 | 2,1 | 71,1 |
| 60 | 21,24 | 66 | 1402 | 18,3 | 78,7 | 1,3 | 81,8 |
| 40 | 30,96 | 48 | 1450 | 15,0 | 83,2 | 0,7 | 91,8 |
| 65 | 28,77 | 66 | 1899 | 3,1 | 96,4 | 0,2 | 96,8 |
| 70 | 30,02 | 66 | 1981 | 4,3 | 95,0 | 0,3 | 95,1 |
| 40 | 51,25 | 48 | 2460 | 10,0 | 88,8 | 0,4 | 94,7 |
| 170 | 37,44 | 66 | 2471 | 0 | 100 | 0 | 100 |
| 90 | 42,98 | 66 | 2837 | 0 | 100 | 0 | 100 |
| 170 | 45,06 | 66 | 2974 | 0 | 100 | 0 | 100 |

(suite)

| X | C | T | CT | Viabilité | | Vigueur | |
|---|---|---|---|---|---|---|---|
| | | | | V | RV | Nm (sur 19 jours) | RNm |
| 80 | 48,02 | 66 | 3169 | 0 | 100 | 0 | 100 |
| 170 | 52,53 | 66 | 3467 | 0 | 100 | 0 | 100 |

En résumé, pour les quatre espèces de champignons étudiés, le DMDS provoque une décroissance de la population très nette à partir de doses CT comprises entre 2000 et 2500 gh/m3, voire aux environs de 1000 gh/m3 dans le cas de *Sclerotinia* et *Sclerotium*, et une mortalité totale pour des doses CT comprises entre 3000 et 3500 gh/m3, voire entre 2000 et 2500 gh/m3 pour *Sclerotium*.

**EXEMPLE 5 (PROPRIETES NEMATICIDES)**

L'effet nématicide du diméthyldisulfure (DMDS), du dipropyldisulfure (DPDS) et du thiosulfinate de diallyle (Allicine), trois produits majeurs de la dégradation des Allium, a été démontré par des tests *in-vitro* réalisés sur des larves de *Meloidogyne arenaria*, une espèce parmi les nématodes à galles des racines, très nocifs, extrêmement polyphages et des plus répandus dans le monde, sur la plupart des cultures légumières, en particulier celles de la tomate et du fraisier qui sont les cultures consommant le plus de bromure de méthyle. Seul le traitement à base de DMDS fait partie de l'invention revendiquée.

**Matériel et méthodes**

Les larves juvéniles de second stade (le stade libre et infestant) sont plongées 24 heures dans la solution à tester, puis on compte le nombre de larves paralysées avant de les transférer dans de l'eau pure pour encore 24 heures. A l'issue des 48 heures ainsi écoulées, on compte à nouveau les larves paralysées et le lendemain les larves réellement mortes.

L'élevage des nématodes a été réalisé sur plants de tomates. Les tests ont été effectués avec des solutions aqueuses de DMDS à 0,0001 %, 0, 1 %, 1 % et 5% en masse, de DPDS à 1%, 5% et 10% en masse, et d'allicine à 0,0003%, 0,0015% et 0,003% en masse, en comparaison avec un témoin d'eau pure, et répétés cinq fois. L'activité ovicide a été également recherchée selon ces même modalités, en comptant le nombre d'éclosions après 5 à 20 jours suivant l'exposition aux produits.

**Résultats**

A une concentration inférieure à 1 %, le DMDS n'a qu'une très faible activité nématostatique et aucune activité nématicide.

A une concentration supérieure ou égale à 1 %, le DMDS et le DPDS présentent une importante activité nématostatique et nématicide, comme le montrent clairement les tableaux 8 et 9. Une efficacité totale (100 % de mortalité) est obtenue pour des concentrations supérieures ou égales à 1 % dans le cas du DPDS.

L'allicine présente également une activité nématostatique et nématicide importante à des concentrations beaucoup plus faibles comme le montre le tableau 10. Néanmoins, une efficacité totale (100 % de mortalité) n'a pas été recherchée dans ce cas.

Tableau 8 : Efficacité du diméthyl disulfure (DMDS) sur les larves

| Concentration massique (%) | Taux d'immobilité après 24 h (%) | Taux d'immobilité après 48 h (%) | Taux de mortalité après 72 h (%) |
|---|---|---|---|
| O (Témoin) | 8 | 6 | 9 |
| 1 | 72 | 84 | 80 |
| 5 | 97 | 98 | 98 |

Tableau 9 : Efficacité du dipropyl disulfure (DPDS) sur les larves

| Concentration Massique (%) | Taux d'immobilité après 24 h (%) | Taux d'immobilité après 48 h (%) | Taux de mortalité après 72 h (%) |
|---|---|---|---|
| O (Témoin) | 8 | 7 | 9 |
| 1 | 89 | 100 | 100 |
| 5 | 93 | 100 | 100 |
| 10 | 95 | 100 | 100 |

Tableau 10 : Efficacité de l'allicine sur les larves

| Concentration massique (%) | Taux d'immobilité après 24 h (%) | Taux d'immobilité après 48 h (%) | Taux de mortalité après 72 h (%) |
|---|---|---|---|
| O (Témoin) | 2 | 10 | 8 |
| 0,0003 | 7 | 49 | 12 |
| 0,0015 | 19 | 85 | 45 |
| 0,003 | 49 | 65 | 63 |

Comme il ressort des tableaux 11 et 12, le DMDS et le DPDS montrent également une activité ovicide très importante. Dans les deux cas, on observe environ 97 % de réduction du nombre d'éclosions le dernier jour d'observation.

Tableau 11 : Efficacité du DMDS sur les oeufs de nématodes

| Concentration massique (%) | Nombre d'éclosions (en cumulé) | | | |
|---|---|---|---|---|
| | J5 | J10 | J13 | J17 |
| O (Témoin) | 141 | 179 | 184 | 184 |
| 1 | 7 | 7 | 7 | 7 |
| 5 | 2 | 2 | 5 | 5 |
| 10 | 0 | 2 | 5 | 5 |

Tableau 12 : Efficacité du DPDS sur les oeufs de nématodes

| Concentration massique (%) | Nombre d'éclosions (en cumulé) | | | | |
|---|---|---|---|---|---|
| | J5 | J8 | J12 | J15 | J19 |
| (O) Témoin | 550 | 810 | 990 | 1030 | 1030 |
| 1 | 117 | 183 | 200 | 200 | 200 |
| 5 | 67 | 67 | 67 | 67 | 67 |
| 10 | 33 | 33 | 33 | 33 | 33 |

**EXEMPLE 6 (PROPRIETES INSECTICIDES)**

L'activité insecticide du diméthyldisulfure (DMDS), du diallyldisulfure (DADS) et du thiosulfinate de diallyle (allicine) a été démontrée par des tests in vitro sur un insecte du sol, un termite (Reticulitermes santonensis). Seul le traitement à base de DMDS fait partie de l'invention revendiquée.

**Matériel et méthodes :**

Du bois mort infesté de termites a été prélevé au sol sur un terrain occupé par une colonie. Ce bois mort sert de milieu d'élevage. L'élevage est maintenu à 25°C constant et une alternance jour/nuit 12 :12.

Les insectes sont prélevés à raison de 2 soldats pour 28 ouvriers.

Les tests sont réalisés dans des bocaux en verre d'un volume de 3L hermétiquement fermés et contenant les insectes.

Le produit à tester est introduit par un trou de 2 mm de diamètre à l'aide d'une micro pipette et déposé sur un papier filtre (2x5cm ; Whatman n°1) suspendu au centre du bocal où il migre par capillarité et se vaporise rapidement. Le trou est refermé hermétiquement au plus vite.

Les bocaux sont placés 24 heures dans une étuve dans les mêmes conditions d'élevage.

Au bout de 24 heures, après quelques instants d'aération, un premier comptage est effectué puis les insectes sont replacés en condition d'élevage pendant encore 24 heures. Le comptage de la mortalité s'effectue donc au bout de 48 heures. C'est ce dernier comptage qui servira à calculer la CL50 à 24 heures de fumigation, le premier n'étant qu'une indication de l'évolution post-traitement. En effet, de nombreux fumigants ont un effet choc « knock-down » qui peut faire penser à la mort pour des insectes qui se révèlent vivants le lendemain après récupération. Chaque test est réalisé sur une population de 30 à 50 insectes et est accompagné d'un témoin sans traitement. Plusieurs répétitions sont réalisées avec des doses proches de la CL50.

**Tableau 13 : Résultats (méthode des Probits)**

| | **DMDS** | **DADS** | **Allicine** |
|---|---|---|---|
| **CL50 en gx24h/m$^3$** | **0.095** | **0.011** | **0.010** |

**Conclusion :**

Comme indiqué dans le tableau 13, les 3 produits testés montrent une excellente activité insecticide sur l'insecte du sol utilisé. L'activité du DADS, proche de celle de l'allicine, est supérieure à celle du DMDS, qui elle-même est comparable à celle du bromure de méthyle (0.1 gx24 h/m$^3$).

**EXEMPLE 7 (EFFETS SUR LES MICRO-ORGANISMES)**

L' effet du DMDS, appliqué à 150 kg/ha sous la forme de la formulation A, sur les micro-organismes du sol a été évalué selon les méthodes standardisées suivantes :

- « Recommended tests for assessing the side-effects of pesticides on the soil micro flora », Technical Report Agricultural Research Council Weed Research Organization, 1980 ( 59 ).
- " OECD Guideline for Testing of Chemicals - Soil Micro-organisms : Carbon Mineralization Test", Draft document, June 1996.

L'effet du DMDS sur les micro-organismes du sol est mesuré par la diminution de l'oxygène consommé par ces micro-organismes, exprimé en mg $O_2$ par kg de sol sec par h, 14, 28, 42, 57 jours après le traitement (tableau 14).

**Tableau 14**

| | Jour 0 | Jour 14 | Jour 28 | Jour 42 | Jour 57 |
|---|---|---|---|---|---|
| Contrôle non traité | 11,23 | 10,18 | 7,87 | 9,12 | 7,30 |
| DMDS 150 kg/ha | 9,70 | 8,74 | 6,62 | 8,93 | 4,90 |

Le tableau 14 montre une diminution significative de l'oxygène consommé par les micro-organismes, attribué à une réduction de leur population.

## Revendications

1. Traitement pesticide des sols ou des substrats de plantes par fumigation, à effet cumulatif, nématicide, fongicide, insecticide et bactéricide, **caractérisé en ce que** l'on applique dans le sol ou dans le substrat à une dose comprise entre 150 et 1000 kg/ha au moins un composé soufré qui est le diméthyldisulfure.

2. Traitement selon la revendication 1, dans lequel le composé soufré est appliqué à l'état pur ou sous la forme d'une émulsion aqueuse, d'une microémulsion, d'une solution dans l'eau ou dans un solvant organique.

3. Traitement selon la revendication 1 ou 2 dans lequel le composé soufré n'a pas d'effet phytotoxique.

4. Traitement selon l'une quelconque des revendication 1 à 3, associé à un traitement simultané ou non avec une ou plusieurs autres substances pesticides.

## Claims

1. Pesticidal treatment of soils or plant substrates by fumigation, with a combined nematocidal, fungicidal, insecticidal and bactericidal effect, **characterized in that** at least one sulphur compound which is dimethyl disulphide is applied, in the soil or in the substrate, at a dose of between 150 and 1000 kg/ha.

2. Treatment according to Claim 1, in which the sulphur compound is applied in the pure state or in the form of an aqueous emulsion, of a microemulsion, of a solution in water or of a solution in an organic solvent.

3. Treatment according to Claim 1 or 2, in which the sulphur compound does not have a phytotoxic effect.

4. Treatment according to any one of Claims 1 to 3, in combination with a simultaneous or non-simultaneous treatment with one or more other pesticidal substances.

## Patentansprüche

1. Pestizidbehandlng von Böden oder Substraten von Pflanzen durch Begasung mit kumulativer nematizider, fungizider, insektizider und bakterizider Wirkung, **dadurch gekennzeichnet, dass** man in dem Boden oder in dem Substrat mindestens eine Schwefelverbindung, bei der es sich um Dimethyldisulfid handelt, in einer Dosis zwischen 150 und 1000 kg/ha ausbringt.

2. Behandlung nach Anspruch 1, wobei die Schwefelverbindung im reinen Zustand oder in Form einer wässrigen Emulsion, einer Mikroemulsion, einer Lösung im Wasser oder in einem organischen Lösungsmittel ausgebracht wird.

3. Behandlung nach Anspruch 1 oder 2, wobei die Schwefelverbindung keine phytotoxische Wirkung ausübt.

4. Behandlung nach einem der Ansprüche 1 bis 3, die mit einer gegebenenfalls gleichzeitigen Behandlung mit einem oder mehreren anderen pestiziden Mitteln kombiniert wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- GB 249830 A
- JP 01207204 A
- JP 57075906 A
- FR 2779615 A
- US 5518692 A
- US 2917429 A


### Littérature non-brevet citée dans la description


- *USDA Report,* vol. 6 (4
- Citrus & Vegetable Magazine, Methyl bromide. Spring, 2000
- Pesticide Manual
- *Pestic. Sci.,* 1999, vol. 55, 200-202
- *Soil Biology and Biochemistry,* vol. 14 (3), 229-232
- *Agric. Biol. Chem.,* 1988, vol. 52 (9), 2383-2385
- Recommended tests for assessing the side-effects of pesticides on the soil micro flora. *Technical Report Agricultural Research Council Weed Research Organization,* 1980